# EUROPÄISCHE PATENTSCHRIFT

(11) **EP 2 984 033 B1**
(45) Veröffentlichungstag und Bekanntmachung des Hinweises auf die Patenterteilung: **11.01.2017**
(21) Anmeldenummer: 14711963.0
(22) Anmeldetag: 20.03.2014
(51) Int. Cl.: C01B 33/035

(54) **VORRICHTUNG UND VERFAHREN ZUM AUSBAU VON POLYKRISTALLINEN SILICIUMSTÄBEN AUS EINEM REAKTOR**
DEVICE AND METHOD FOR THE REMOVAL OF POLYCRYSTALLINE SILICON RODS FROM A REACTOR
DISPOSITIF ET PROCÉDÉ POUR RETIRER DES BARREAUX DE SILICIUM POLYCRISTALLIN DANS UN RÉACTEUR

(30) Priorität: 10.04.2013 DE 102013206339
(43) Veröffentlichungstag der Anmeldung: 17.02.2016
(73) Patentinhaber: Wacker Chemie AG, 81737 München (DE)
(72) Erfinder: WEISS, Tobias, 84561 Mehring (DE); ALMASY, Udo, 84367 Tann (DE); FÄRBER, Stefan, 84577 Tüßling (DE); PECH, Reiner, 84524 Neuötting (DE)
(74) Vertreter: Potten, Holger
(86) Internationale Anmeldenummer: PCT/EP2014/055604
(87) Internationale Veröffentlichungsnummer: WO 2014/166717

(56) Entgegenhaltungen:
- DE-B3-102009 027 830
- US-A1- 2010 043 972
- US-A1- 2012 175 613
- US-A1- 2012 237 678

## Beschreibung

Die Erfindung betrifft eine Vorrichtung und ein Verfahren zum Ausbau von polykristallinen Siliciumstäben aus einem Reaktor.

Hochreines polykristallines Silicium (Polysilicium) dient als Ausgangsmaterial zur Herstellung von einkristallinem Silicium für Halbleiter nach dem Czochralski(CZ)- oder Zonenschmelz(FZ)-Verfahren, sowie zur Herstellung von ein- oder multikristallinem Silicium nach verschiedenen Zieh- und GießVerfahren zur Produktion von Solarzellen für die Photovoltaik.

Polysilicium wird üblicherweise mittels des Siemens-Verfahrens hergestellt. Dabei wird ein Reaktionsgas umfassend eine oder mehrere Silicium enthaltende Komponenten und gegebenenfalls Wasserstoff in einen Reaktor umfassend durch direkten Stromdurchgang erhitzte Trägerkörper eingeleitet, wobei sich an den Trägerkörpern Silicium in fester Form abscheidet. Als Silicium enthaltende Komponenten werden bevorzugt Silan (SiH₄), Monochlorsilan (SiH₃Cl), Dichlorsilan (SiH₂Cl₂), Trichlorsilan (SiHCl₃), Tetrachlorsilan (SiCl₄) oder Mischungen der genannten Stoffe eingesetzt.

Das Siemens-Verfahren wird üblicherweise in einem Abscheidereaktor (auch "Siemens-Reaktor" genannt) durchgeführt. In der gebräuchlichsten Ausführungsform umfasst der Reaktor eine metallische Grundplatte und eine kühlbare Glocke, die auf die Grundplatte gesetzt ist, so dass ein Reaktionsraum im Inneren der Glocke entsteht. Die Grundplatte ist mit einer oder mehreren Gaseinlassöffnungen und einer oder mehreren Abgasöffnungen für die abgehenden Reaktionsgase sowie mit Halterungen versehen, mit deren Hilfe die Trägerkörper im Reaktionsraum gehalten und mit elektrischen Strom versorgt werden.

Jeder Trägerkörper besteht meistens aus zwei dünnen Filamentstäben und einer Brücke, die in der Regel benachbarte Stäbe an ihren freien Enden verbindet. Die Filamentstäbe stecken senkrecht in am Reaktorboden befindlichen Elektroden, über die der Anschluss an die Stromversorgung erfolgt. An den erhitzten Filamentstäben und der waagrechten Brücke scheidet sich hochreines Polysilicium ab, wodurch deren Durchmesser mit der Zeit anwächst. Nachdem der gewünschte Durchmesser erreicht ist, wird der Prozess beendet.

Dabei werden U-förmige Siliciumstäbe erhalten, die mehrere Meter hoch sein können und mehrere 100 kg wiegen können. Für einen möglichst wirtschaftlichen Prozess ist es notwendig, auf maximale Stabdurchmesser abzuscheiden.

Problematisch ist der Ausbau sehr großer und schwerer Stäbe aus dem Reaktor. Der Ausbau sollte möglichst kontaminationsarm und möglichst wirtschaftlich erfolgen, nämlich mit einer minimalen Stillstandszeit des Reaktors verbunden sein. Es sollte auch möglich sein, schiefe, ungleichmäßig geformte (z.B. elliptisch, keulig, d.h. mit variierendem Stabdurchmesser über die Stabhöhe) oder sich berührende Stäbe sicher auszubauen.

US 20120237678 A1 offenbart eine Vorrichtung zum Ausbau von polykristallinen Siliciumstäben, umfassend einen Körper mit Außenwänden, der so dimensioniert ist, dass die Stäbe von den Außenwänden umschlossen werden, wobei jede Außenwand eine Tür beinhaltet, um Zugang zu wenigstens einem der Stäbe zu erlauben. In einer bevorzugten Ausführungsform sind die Innenwände mit einem Polymer ausgekleidet, um eine Kontamination der polykristallinen Siliciumstäbe zu verhindern.

US 20100043972 A1 offenbart eine weitere Vorrichtung zum Ausbau von polykristallinen Siliciumstäben, umfassend eine Wand mit einer Innenwand, einer Außenwand und einer Vielzahl von Verbindungen zwischen Innenwand und Außenwand, eine Lücke zwischen Innen- und Außenwand, ein Zugangsfenster in der Außenwand, eine Bodenplatte, und eine Vielzahl von Kontakten auf der Bodenplatte, wobei Innen- und Außenwand zylindrisch und konzentrisch sind, die Lücke so dimensioniert ist, um eine Vielzahl von auf den Kontakten der Bodenplatte befindlichen Siliciumstäben aufzunehmen, wobei das Zugangsfenster so gestaltet ist, dass Zugang zu den Siliciumstäben ermöglicht wird. Die Stäbe können über die Zugangsfenster entnommen werden.

Nachteilig an den zuvor beschriebenen Vorrichtungen ist, dass bei schief stehenden Stäben oder bei einer teilweise umgefallenen Charge, was nicht selten vorkommt, deren Einsatz unmöglich ist. Daher ist diese Vorrichtung für eine wirtschaftliche Produktion von Polysilicium wenig praktikabel.

Dies gilt auch für das in DE 10 2009 027 830 B3 beanspruchte Verfahren zur Entnahme von polykristallinen Siliciumstäben aus einem Reaktor, dass dadurch gekennzeichnet ist, dass eine starre und automatisierte Führung mit einem Computer gestützten Erkennungsverfahren anhand von Kalibrierungspunkten über den geöffneten Reaktor gefahren wird und die Stabpaare mittels einer mechanischen oder pneumatischen Klemmvorrichtung gegriffen werden und diese anschließend in eine Transportvorrichtung ablegt werden.

JP 63296840 A offenbart eine Vorrichtung zum Ausbau von Siliciumstäben aus einem Abscheidereaktor, bei dem ein einzelnes Stabpaar mithilfe von Klammern fixiert wird und aus dem Reaktor seitlich herausgehoben wird.

JP 2002210355 A offenbart ebenfalls eine Vorrichtung zum Ausbau von Siliciumstäben, umfassend einen in drei Dimensionen beweglichen Arm, an dessen Ende eine Klemmvorrichtung montiert ist, mit der die Siliciumstäbe aus dem Reaktor gehoben werden können.

Nachteilig bei diesen beiden Vorrichtungen ist die Tatsache, dass die Stäbe aus dem komplett geöffneten Reaktor nur von außen nach innen entnommen werden können. Ein gezielter Ausbau eines bestimmten Siliciumstabes z.B. aus einem inneren Stabkreis, was manchmal wünschenswert ist, ist mit der beschriebenen Vorrichtung nicht möglich.

US 20120175613 A1 offenbart ein Verfahren zur Herstellung eines polykristallinen Siliciumstücks, bestehend aus einem CVD-Prozess zur Herstellung eines polykristallinen Siliciumstabs durch Abscheidung von Silicium auf einem Filamentdraht, dessen eines Ende an einer ersten Elektrode und dessen anderes Ende an einer zweiten Elektrode angeschlossen ist, einem Prozess zur Entnahme des polykristallinen Siliciumstabs aus dem Reaktor sowie einem Zerkleinerungsprozess des Siliciumstabs in Siliciumstücke, dadurch gekennzeichnet, dass vor dem Zerkleinerungsprozess mindestens 70 mm ab dem Elektrodenende vom polykristallinen Siliciumstab entfernt werden (Fußkürzungsprozess). In einer bevorzugten Ausführungsform wird die Oberfläche des polykristallinen Siliciumstabs vor der Entnahme aus dem Reaktor mit einem sackartigen Teil aus Polyethylen überzogen. Die Entnahme selbst kann mittels eines Krans oder dergleichen erfolgen. Bezüglich der zuvor angesprochenen Probleme beim Ausbau der Stäbe mittels bekannter Vorrichtungen gibt US 20120175613 A1 keine Lösungshinweise oder Anregungen.

Aus der beschriebenen Problematik ergab sich die Aufgabenstellung der Erfindung.

Die Erfindung sieht vor eine Vorrichtung zum Ausbau von polykristallinen Siliciumstäben aus einem Reaktor enthaltend U-förmige Stabpaare, umfassend einen Körper mit einer Außenwand und einer Innenwand, der so dimensioniert ist, dass er ein U-förmiges Stabpaar vollständig umschließen kann, wobei der Körper mit dem von ihm umschlossenen U-förmigen Stabpaar derart mit einem Kran, einem Seilzug oder einem Greifer zusammenwirkt, dass der Körper mitsamt dem U-förmigen Stabpaar aus dem Reaktor entfernt werden kann.

Es hat sich gezeigt, dass die Verwendung einer derartigen Vorrichtung ohne Auswirkungen auf andere Stabpaare im Reaktor ist.

Die Erfindung betrifft auch ein Verfahren zum Ausbau von polykristallinen Siliciumstäben aus einem Reaktor, wobei der Reaktor U-förmige Stabpaare umfasst, wobei eines der U-förmigen Stabpaare von einem Körper mit einer Außenwand und einer Innenwand vollständig umschlossen wird, und der Körper mitsamt dem von ihm umschlossenen Stabpaar mittels eines Kranes, eines Seilzuges oder eines Greifers aus dem Reaktor entfernt wird.

Der Körper ist vorzugsweise so dimensioniert, dass seine Länge mindestens der Höhe des stehenden Stabpaares entspricht.

Vorzugsweise beträgt seine Länge mindestens 2,5 m.

Seine Breite beträgt vorzugsweise mindestens der Breite eines U-förmigen Siliciumstabpaares (Siliciumbrücke + Stabdurchmesser).

Vorzugsweise beträgt seine Breite mindestens 200 mm, besonders bevorzugt mindestens 300 mm.

Es hat sich gezeigt, dass ein besonders sicherer und kontaminationsarmer Ausbau der Siliciumstäbe dadurch gewährleistet werden kann, dass der Körper bezüglich seiner maximalen Breite und Tiefe derart ausgestaltet ist, dass der Abstand zu den Nachbarstabpaaren minimal 1 cm beträgt.

Dadurch können auch schief gewachsene oder stark keulige Stäbe ausgebaut werden.

Auch der Ausbau von instabilen Polysiliciumstäben (z.B. mit hohem Popcornanteil, nämlich hoher Oberflächenrauhigkeit, oder Instabilität durch Absprünge am Siliciumstab) ist ohne Probleme möglich. Insbesondere besteht nicht die Gefahr, dass die gesamte Charge bzw. einzelne Stabpaare dabei umfallen könnten.

Da ein stabpaarweises Ausbauen erfolgt, kann jedes Siliciumstabpaar zu jedem beliebigem Zeitpunkt ausgebaut werden. Insbesondere ist ein Ausbau von innen nach außen möglich, was bei Vorrichtungen nach Stand der Technik nicht vorgesehen war.

Ein gezielter Ausbau eines bestimmten Stabpaars bereitet keine Schwierigkeiten.

Vorzugsweise weist der Körper eine Innenwand aus Stahl auf. Die Innenwand der Körpers kann mit einem Polymer beschichtet sein.

Vorzugweise besteht der Körper aus Stahl, weist also einen Stahlmantel auf.

Besonders bevorzugt ist eine Ausführung, die einen Körper mit einer unbeschichteten Stahlinnenwand vorsieht, wobei das Siliciumstabpaar während des Ausbaus mit einem Kunststoffsack überzogen ist.

Diese Ausführungsform ist besonders platzsparend, wenn die Stahlwand möglichst dünn ist.

Eine Beschichtung der Stahlinnenwand ist in diesem Fall nicht erforderlich, da der Kunststoffsack das Silicium vor Kontaminationen schützt.

Alternativ zur unbeschichteten Stahlwand in Kombination mit einem Kunststoffsack ist insbesondere auch eine Ausführungsform des Körpers in kontaminationsarmen Hartmetall (z.B. Wolframcarbid, TiN oder andere) oder sonstigen abriebsarmen Keramiken bevorzugt.

Bevorzugt ist auch die Verwendung eines Körpers enthaltend eine Stahlinnenwand, wobei die Innenwand des Körpers mit einem solchen kontaminationsarmen Hartmetall oder mit einer abriebsarmen Keramik teilweise oder vollflächig beschichtet ist.

Ebenso ist es bevorzugt, dass der Körper aus einem flexiblen, aber stabilen Kunststoff besteht. Als mögliche Kunststoffe bieten sich hierbei Faserverbundkunststoff, aus einem aromatischen Polyamid (Aramidfasern) oder aus einem Polyester wie Polycarbonat und Polyethylenterephthalat an. Genauso sind Materialien aus Carbon oder Carbon-Bestandteilen oder Glasfaserverstärkte Kunststoffe (GFK) möglich.

Das Herausheben des Siliciumstabpaares selbst kann erfolgen mit Hilfe einer Kranvorrichtung, einem Seilzug oder vergleichbaren Systemen.

Vorzugsweise umfasst der Körper eine händisch oder mittels eines mechanischen oder elektrischen Mechanismus schließbare Klappe an einer Öffnung des Körpers, so dass sich das U-förmige Stabpaar komplett im Körper einschließen und so aus dem Reaktor heben lässt. Der Abtransport des herausgehobenen Stabpaares zu weiterverarbeitenden Prozessen erfolgt vorzugsweise mittels eines Transportwagens.

Auch die Verwendung von Greifern ist möglich, um die Stäbe paarweise aus dem Reaktor auszubauen. Die Greifer sind vorzugsweise so dimensioniert, dass sie eine möglichst geringe Ausladung haben und auch bei eng angeordneten Stäben im Reaktor noch ein sicheres Fixieren der Stabpaare ermöglichen. Ein kontaminationsarmes und sicheres Ausbauen der Stabpaare mittels solcher Greifer bereitet keine Schwierigkeiten. Allerdings besteht bei der Verwendung solcher Greifer der Nachteil, dass wie bei manchen Lösungen nach dem Stand der Technik ein Ausbau der Stäbe nur von außen nach innen erfolgen kann.

Die Erfindung ermöglicht den Ausbau von sehr großen Siliciumstäben aus einem Reaktor, ohne diese zu beschädigen oder zu kontaminieren.

Durch die Erfindung wird es möglich, den maximalen Stabdurchmesser abzuscheiden. Der maximal mögliche Stabdurchmesser hängt ausschließlich von der Anordnung der Stäbe im Reaktor und vom Abscheideprozess ab. Bislang war die Abscheidung von Stäben mit maximal möglichem Stabdurchmesser deshalb nicht möglich, weil keine Möglichkeit bekannt war, solche Stäbe sicher und kontaminationsarm auszubauen.

Auch schief stehende oder keulige Stäbe, ebenso wie Stäbe mit hoher Oberflächenrauhigkeit oder instabil abgeschieden Stäbe (mit erhöhter Porosität), oder sich gegenseitig berührende Stäbe können ohne Schwierigkeiten ausgebaut werden.

Die Erfindung kann seine Vorteile besonders dann ausspielen, wenn die Stäbe im Reaktor besonders eng angeordnet sind.

Die Enge im Reaktor lässt sich definieren als das Verhältnis von maximalem Siliciumstabquerschnitt einer Charge dividiert durch die durch den Reaktorinnendurchmesser aufgespannte Fläche.

Bei einem Verhältnis zwischen 0,2 und 0,5 ist ein stabpaarweises Ausbauen nach bekanntem Stand der Technik nicht möglich. Die Vorrichtungen nach US 20120237678 A1 und US 20100043972 A1ermöglichen im Gegensatz zur vorliegenden Erfindung keinen individuellen paarweisen Ausbau von sehr dicken Stäben (Enge 0,2 - 0,5), da Position und Größe der Stäbe durch die vorgegebenen Kammern im Ausbausystem stark begrenzt sind. Steigen die Stabdurchmesser über den möglichen Engefaktor hinaus (wenn auch nur bei wenigen Stabpaaren im gesamten Reaktor), so können beide Ausbausysteme nicht mehr zum Ausbau der Stäbe eingesetzt werden, da die zu dicken oder schiefen Stäbe nicht in die dafür vorgesehenen Kammern passen. In diesem Fall muss händisch versucht werden, die Stäbe einzeln auszubauen. Dies ist sehr zeitaufwändig, verursacht erhöhte Kontamination des Siliciums und ist zudem für die Mitarbeiter gefährlich (Stäbe können umfallen). Schlimmstenfalls muss die gesamte Charge bewusst umgeworfen werden.

Die vorliegende Erfindung sieht vor, dass der Stabausbau paarweise erfolgt und der Abscheidereaktor eine gerade Anzahl an Stäben umfasst.

Vorzugweise beträgt die Zahl der Stäbe mindestens 24.

Die Stäbe weisen vorzugsweise einen Durchmesser von mindestens 145 mm auf.

## Patentansprüche

1. Vorrichtung zum Ausbau von polykristallinen Siliciumstäben aus einem Reaktor enthaltend U-förmige Stabpaare, umfassend einen Körper mit einer Außenwand und einer Innenwand, der so dimensioniert ist, dass er genau ein U-förmiges Stabpaar vollständig umschließen kann, wobei der Körper mitsamt dem von ihm umschlossenen U-förmigen Stabpaar mittels eines Kranes, eines Seilzuges oder eines Greifers aus dem Reaktor entfernt werden kann.

2. Vorrichtung nach Anspruch 1, wobei der Körper so dimensioniert ist, dass seine Länge mindestens der Höhe eines U-förmigen Stabpaares und seine Breite mindestens der Breite eines U-förmigen Stabpaares entspricht.

3. Vorrichtung nach Anspruch 1 oder nach Anspruch 2, wobei der Körper eine Innenwand aus Stahl aufweist und das Stabpaar mit einem Kunststoffsack überzogen ist.

4. Vorrichtung nach Anspruch 1 oder nach Anspruch 2, wobei der Körper aus einem kontaminationsarmen Hartmetall oder aus einem stabilen und flexiblen Kunststoff besteht.

5. Vorrichtung nach Anspruch 1 oder 2, wobei der Körper eine Innenwand aus Stahl aufweist, die mit einem Kunststoff beschichtet ist.

6. Vorrichtung nach Anspruch 1 oder 2, wobei der Körper eine Innenwand aus Stahl aufweist, die teilweise oder vollflächig mit einem kontaminationsarmen Hartmetall beschichtet ist.

7. Vorrichtung nach einem der Ansprüche 1 bis 6, wobei der Körper eine händisch oder mittels eines mechanischen oder elektrischen Mechanismus schließbare Klappe an einer Öffnung des Körpers umfasst.

8. Verfahren zum Ausbau von polykristallinen Siliciumstäben aus einem Reaktor, wobei der Reaktor U-förmige Stabpaare umfasst, wobei genau eines der U-förmigen Stabpaare von einem Körper mit einer Außenwand und einer Innenwand vollständig umschlossen wird, und der Körper mitsamt dem von ihm umschlossenen Stabpaar mittels eines Kranes, eines Seilzuges oder eines Greifers aus dem Reaktor entfernt wird.

9. Verfahren nach Anspruch 8, wobei der Körper so dimensioniert ist, dass seine Länge mindestens der Höhe eines U-förmigen Stabpaares und seine Breite mindestens der Breite eines U-förmigen Stabpaares entspricht.

10. Verfahren nach Anspruch 8 oder nach Anspruch 9, wobei der Körper eine Innenwand aus Stahl aufweist und das Stabpaar, bevor es vom Körper umschlossen wird, mit einem Kunststoffsack überzogen wird.

11. Verfahren nach Anspruch 8 oder nach Anspruch 9, wobei der Körper aus einem kontaminationsarmen Hartmetall oder aus einem stabilen und flexiblen Kunststoff besteht.

12. Verfahren nach Anspruch 8 oder nach Anspruch 9, wobei der Körper eine Innenwand aus Stahl aufweist, die mit einem Kunststoff beschichtet ist.

13. Verfahren nach Anspruch 8 oder nach Anspruch 9, wobei der Körper eine Innenwand aus Stahl aufweist, die teilweise oder vollflächig mit einem kontaminationsarmen Hartmetall beschichtet ist.

14. Verfahren nach einem der Ansprüche 8 bis 13, wobei der Körper, nachdem er das Stabpaar umschließt, bezüglich seiner maximalen Breite und Tiefe derart ausgestaltet ist, dass der Abstand zu Nachbarstabpaaren minimal 1 cm beträgt.

15. Verfahren nach einem der Ansprüche 8 bis 14, wobei die Stäbe im Reaktor derart eng angeordnet sind, dass nach Beendigung der Abscheidung ein Verhältnis von maximalem Siliciumstabquerschnitt zu der vom Reaktorinnendurchmesser aufgespannten Fläche 0,2 bis 0,5 beträgt.

16. Verfahren nach einem der Ansprüche 8 bis 15, wobei der Durchmesser der Siliciumstäbe jeweils mindestens 145 mm beträgt.

## Claims

1. Device for the removal of polycrystalline silicon rods from a reactor containing U-shaped rod pairs, comprising a body having an outer wall and an inner wall which is dimensioned such that it can completely enclose precisely one U-shaped rod pair, wherein the body together with the U-shaped rod pair enclosed thereby can be removed from the reactor by means of a crane, a cable hoist or a gripper.

2. Device according to Claim 1, wherein the body is dimensioned in such a manner that the length thereof corresponds to at least the height of a U-shaped rod pair and the width thereof corresponds to at least the width of a U-shaped rod pair.

3. Device according to Claim 1 or according to Claim 2, wherein the body has an inner wall made of steel and the rod pair is covered with a plastic bag.

4. Device according to Claim 1 or according to Claim 2, wherein the body is made of a low-contamination hard metal, or is made of a stable and flexible plastic.

5. Device according to Claim 1 or 2, wherein the body has an inner wall made of steel which is coated with a plastic.

6. Device according to Claim 1 or 2, wherein the body has an inner wall made of steel which is partially or completely coated with a low-contamination hard metal.

7. Device according to any one of Claims 1 to 6, wherein the body comprises at an opening of the body a flap which is closable manually or by means of a mechanical or electrical mechanism.

8. Method for the removal of polycrystalline silicon rods from a reactor, wherein the reactor comprises U-shaped rod pairs, wherein precisely one of the U-shaped rod pairs is completely enclosed by a body having an outer wall and an inner wall, and the body together with the rod pair enclosed thereby is removed from the reactor by means of a crane, a cable hoist or a gripper.

9. Method according to Claim 8, wherein the body is dimensioned in such a manner that the length thereof corresponds to at least the height of a U-shaped rod pair and the width thereof corresponds to at least the width of a U-shaped rod pair.

10. Method according to Claim 8, or according to Claim 9, wherein the body has an inner wall made of steel and the rod pair, before it is enclosed by the body, is covered with a plastic bag.

11. Method according to Claim 8, or according to Claim 9, wherein the body is made of a low-contamination hard metal, or is made of a stable and flexible plastic.

12. Method according to Claim 8, or according to Claim 9, wherein the body has an inner wall made of steel which is coated with a plastic.

13. Method according to Claim 8, or according to Claim 9, wherein the body has an inner wall made of steel which is partially or completely coated with a low-contamination hard metal.

14. Method according to any one of Claims 8 to 13, wherein the body, after it has enclosed the rod pair, is configured with respect to the maximum width and depth thereof in such a manner that the distance from adjacent rod pairs is a minimum of 1 cm.

15. Method according to any one of Claims 8 to 14, wherein the rods in the reactor are arranged closely in the reactor in such a manner that, after termination of the deposition, a ratio of maximum silicon rod cross section to the area spanned by the reactor internal diameter is 0.2 to 0.5.

16. Method according to any one of Claims 8 to 15, wherein the diameter of the silicon rods is in each case at least 145 mm.

## Revendications

1. Dispositif pour retirer des barres de silicium polycristallin d'un réacteur contenant des paires de barres en forme d'U, comprenant un corps ayant une paroi externe et une paroi interne, qui est dimensionné de manière à pouvoir exactement entourer complètement une paire de barres en forme d'U, le corps pouvant être retiré du réacteur, conjointement avec la paire de barres en forme d'U qu'il entoure, au moyen d'une grue, d'un palan ou d'un grappin.

2. Dispositif selon la revendication 1, dans lequel le corps est dimensionné de telle sorte que sa longueur correspond au moins à la hauteur d'une paire de barres en forme d'U et sa largeur correspond au moins à la largeur d'une paire de barres en forme d'U.

3. Dispositif selon la revendication 1 ou selon la revendication 2, dans lequel le corps présente une paroi interne en acier et la paire de barres est recouverte d'un sac en matière plastique.

4. Dispositif selon la revendication 1 ou selon la revendication 2, dans lequel le corps est constitué d'un métal dur à faible contamination ou d'une matière plastique stable et flexible.

5. Dispositif selon la revendication 1 ou 2, dans lequel le corps présente une paroi interne en acier, qui est revêtue d'une matière plastique.

6. Dispositif selon la revendication 1 ou 2, dans lequel le corps présente une paroi interne en acier, qui est revêtue partiellement ou sur toute sa surface d'un métal dur à faible contamination.

7. Dispositif selon l'une quelconque des revendications 1 à 6, dans lequel le corps comprend sur une ouverture du corps un clapet qui peut être fermé manuellement ou au moyen d'un mécanisme mécanique ou électrique.

8. Procédé pour retirer des barres de silicium polycristallin d'un réacteur, le réacteur comprenant des paires de barres en forme d'U, dans lequel une des paires de barres en forme d'U est entourée complètement par un corps ayant une paroi externe et une paroi interne, et le corps est retiré du réacteur, conjointement avec la paire de barres qu'il entoure, au moyen d'une grue, d'un palan ou d'un grappin.

9. Procédé selon la revendication 8, dans lequel le corps est dimensionné de telle sorte que sa longueur correspond au moins à la hauteur d'une paire de barres en forme d'U et sa largeur correspond au moins à la largeur d'une paire de barres en forme d'U.

10. Procédé selon la revendication 8 ou selon la revendication 9, dans lequel le corps présente une paroi interne en acier et la paire de barres, avant d'être entourée par le corps, est recouverte d'un sac en matière plastique.

11. Procédé selon la revendication 8 ou selon la revendication 9, dans lequel le corps est constitué d'un métal dur à faible contamination ou de matière plastique stable et flexible.

12. Procédé selon la revendication 8 ou selon la revendication 9, dans lequel le corps présente une paroi interne en acier, qui est revêtue d'une matière plastique.

13. Procédé selon la revendication 8 ou selon la revendication 9, dans lequel le corps présente une paroi interne en acier qui est revêtue partiellement ou sur toute sa surface d'un métal dur à faible contamination.

14. Procédé selon l'une quelconque des revendications 8 à 13, dans lequel le corps, après qu'il entoure la paire de barres, est configuré en ce qui concerne sa largeur et sa profondeur maximales, de telle sorte que la distance qui le sépare des paires de barres les plus voisines est d'au minimum 1 cm.

15. Procédé selon l'une quelconque des revendications 8 à 14, dans lequel les barres sont disposées étroitement dans le réacteur, de sorte qu'après l'achèvement du dépôt est présent un rapport de la section transversale maximale des barres de silicium à la surface définie par le diamètre interne du réacteur vaut de 0,2 à 0,5.

16. Procédé selon l'une quelconque des revendications 8 à 15, dans lequel le diamètre des barres de silicium est chaque fois d'au moins 145 mm.
